# EUROPÄISCHE PATENTSCHRIFT

(11) **EP 0 857 128 B1**
(45) Veröffentlichungstag und Bekanntmachung des Hinweises auf die Patenterteilung: **02.06.2004**
(21) Anmeldenummer: 96934785.5
(22) Anmeldetag: 22.10.1996
(51) Int. Cl.: B60T 8/44, B60T 11/20

(54) **HAUPTBREMSZYLINDER MIT RÜCKLAUFANSCHLUSS**
BRAKE MASTER CYLINDER WITH RETURN CONNECTION
MAITRE-CYLINDRE DE FREIN AVEC RACCORD DE RETOUR

(30) Priorität: 27.10.1995 DE 19540151
(43) Veröffentlichungstag der Anmeldung: 12.08.1998
(73) Patentinhaber: Lucas Industries Limited, West Midlands B90 4LA (GB)
(72) Erfinder: BARZ, Uwe, D-56299 Ochtendung (DE); MALLMANN, Markus, D-56291 Pfalzfeld (DE); WAGNER, Bernd, D-56584 Rüscheid (DE)
(74) Vertreter: Beyer, Andreas, Dr.
(86) Internationale Anmeldenummer: PCT/EP1996/004587
(87) Internationale Veröffentlichungsnummer: WO 1997/015481

(56) Entgegenhaltungen:
- EP-A- 0 219 834
- DE-A- 4 112 134
- US-A- 4 440 454

## Beschreibung

Die Erfindung betrifft einen Hauptbremszylinder für eine hydraulische Fahrzeugbremsanlage gemäß dem Oberbegriff des Patentanspruchs 1. Insbesondere betrifft die Erfindung einen Hauptbremszylinder, der zum Zusammenwirken mit einem Bremsdruckregelsystem geeignet ist, welches eine Antriebsschlupfregelung und/oder eine Fahrdynamikregelung umfaßt. Ein solcher Hauptbremszylinder ist aus der DE 41 12 134 A1 bekannt, die eine schlupfgeregelte hydraulische Bremsanlage für Kraftfahrzeuge beschreibt.

Hydraulische Fahrzeugbremsanlagen sind heutzutage häufig mit einem Bremsdruckregelsystem ausgerüstet, das vor allem verhindern soll, daß die Räder des Fahrzeugs bei sehr starkem Abbremsen blockieren. Ein Bremsdruckregelsystem dieser Art wird zumeist als Antiblockiersystem bezeichnet. Zunehmend werden jedoch die einem solchen Bremsdrucksystem inhärenten Fähigkeiten auch dazu verwendet, das Durchdrehen angetriebener Fahrzeugräder, zu dem es insbesondere beim Beschleunigen auf rutschigem Untergrund kommen kann, zu verhindern oder zumindest zu begrenzen. Man spricht in diesem Zusammenhang von einer Antriebsschlupfregelung. Noch weiter entwickelte Systeme benutzen das Bremsdruckregelsystem dazu, kritische Fahrzeugzustände zu entschärfen, beispielsweise ein drohendes Ausbrechen des Fahrzeugs in einer zu schnell angefahrenen Kurve. Hierzu werden Signale verschiedener Sensoren verarbeitet, die Auskunft über momentane Größen wie beispielsweise Fahrgeschwindigkeit, Lenkwinkeleinschlag, Querbeschleunigung und andere den momentanen Fahrzustand beschreibende Parameter geben, woraufhin das System bei Feststellung eines gefährlichen Fahrzustandes unter anderem durch gezielte Bremseingriffe an einzelnen Rädern versucht, diesen gefährlichen Fahrzustand zu beseitigen. Solche Systeme werden als Fahrdynamikregelungen bezeichnet. Ein prinzipieller Unterschied zwischen einem nur für blockiergeschützte Bremsungen ausgebildeten Bremsdruckregelsystem und einem Bremsdruckregelsystem, das darüberhinaus zur Antriebsschlupfregelung oder Fahrdynamikregelung herangezogen wird, liegt darin, daß letzteres sowohl bei betätigtem als auch bei unbetätigtem Hauptbremszylinder dazu in der Lage sein muß, Bremsdruck aufzubauen, da der Fahrzeugführer selbst bei aktiver Antriebsschlupf- oder Fahrdynamikregelung die Bremse nicht betätigt.

Übliche Bremsdruckregelanlagen weisen eine sogenannte Rückförderpumpe auf, die für hohen Druck und kleinen Volumenstrom ausgelegt und nicht selbstansaugend ist. Das Hydraulikfluid muß der Rückförderpumpe daher unter einem gewissen Vordruck zugeführt werden. Bei nur für blockiergeschützte Bremsungen ausgelegten Bremsdruckregelsystemen reicht hierfür unter Umständen der vom Fahrer im Hauptbremszylinder durch Betätigen des Bremspedals erzeugte Druck aus. Soll das Bremsdruckregelsystem aber auch zur Antriebsschlupfregelung und/oder Fahrdynamikregelung herangezogen werden, muß eine sogenannte Vorladepumpe vorhanden sein, die auch bei unbetätigtem Hauptbremszylinder der Rückförderpumpe einen ausreichenden Vordruck zur Verfügung stellen kann. Die Installation einer Vorladepumpe in ein Bremsdruckregelsystem erfordert herkömmlicherweise mehrere Elektromagnetventile, wie beispielsweise aus der DE-A-44 45 401 ersichtlich ist.

Aus der US-A-4 440 454 ist eine Vorladepumpe bekannt, von der druckseitig eine Leitung zu einem Rücklaufanschluß führt, der in einen Ringraum eines Hauptbremszylinders mündet. Von diesem Ringraum führt ein Kanal durch einen Kolben des Hauptbremszylinders in einen weiteren Ringraum, der mit einem Auslaß versehen ist, welcher über eine Leitung mit dem Hydraulikfluid-Vorratsbehälter verbunden ist. Im praktischen Betrieb stehen die genannten beiden Ringräume nicht in flüssigkeitsleitender Verbindung. Die US-A-4 440 454 offenbart demnach eine Flüssigkeitsverbindung, die von der Druckseite der Vorladepumpe über eine Leitung und einen Rücklaufanschluß zu einer Druckkammer im Hauptbremszylinder führt. Saugseitig ist die Vorladepumpe mit dem Hydraulikfluid-Vorratsbehälter verbunden.

Aus der EP-A-0 219 834 ist ein Hauptbremszylinder bekannt, der keine Flüssigkeitsverbindung zwischen der Druckseite einer Vorladepumpe, einem Vorratsbehälter für Hydraulikfluid und zumindest einer Druckkammer aufweist. Die US-A-5 544 485 beschreibt einen Hauptbremszylinder mit verringertem Leerweg beim Betätigen. Sowohl gemäß der EP-A-0 219 834 als auch gemäß der US-A-5 544 485 wird eine Drossel verwendet, die den sich in der Druckkammer des Hauptbremszylinders aufbauenden Bremsdruck nur verzögert abfließen läßt.

Der Erfindung liegt die Aufgabe zugrunde, einen Hauptzylinder zu schaffen, mit dem Bremsdruckregelsysteme mit Antriebsschlupfregelungs- und/oder Fahrdynamikregelungsfunktion vereinfacht werden können.

Diese Aufgabe ist ausgehend von einem Hauptbremszylinder der eingangs genannten Art erfindungsgemäß dadurch gelöst, daß in der im Einbauzustand des Hauptbremszylinders bestehenden Flüssigkeitsverbindung zwischen der Druckseite der Vorladepumpe, dem Vorratsbehälter und zumindest der einen Druckkammer eine Drossel angeordnet ist, die den Hydraulikfluidstrom aus dem Vorratsbehälter in die mindestens eine Druckkammer nicht behindert und den Hydraulikfluidstrom von dem Rücklaufanschluß in den Vorratsbehälter immer bedrosselt. Durch die gemeinsame Flüssigkeitsverbindung zwischen der Druckseite der Vorladepumpe, dem Vorratsbehälter und zumindest der einen Druckkammer im Hauptzylindergehäuse wirkt die Vorladepumpe erfindungsgemäß direkt auf die zumindest eine Druckkammer und sorgt dadurch für einen gewissen Vordruck in zumindest dem Bremskreis, der an die eine Druckkammer angeschlossen ist. Die richtungsabhängige Drossel läßt einerseits ein ungehindertes Strömen von Hydraulikfluid aus dem Vorratsbehälter in die zumindest eine Druckkammer zu, sorgt andererseits aber durch ihre Drosselwirkung in der entgegengesetzten Fließrichtung, d.h. vom Rücklaufanschluß zum Vorratsbehälter, dafür, daß die Vorladepumpe bei Betrieb einen bestimmten Vordruck in der zumindest einen Druckkammer des Hauptbremszylinders aufbauen kann. Ein Elektromagnetventil in einer von der Druckseite der Vorladepumpe zum Vorratsbehälter führenden Hydraulikleitung; das bei herkömmlichen Systemen notwendig ist, um einen Druckaufbau zu ermöglichen, kann bei der erfindungsgemäßen Lösung entfallen. Allen erfindungsgemäßen Ausführungsbeispielen eigen ist die Tatsache, daß der durch die Vorladepumpe erzeugte Druck direkt auf die zumindest eine Druckkammer des Hauptbremszylinders und damit direkt auf zumindest einen Bremskreis wirken kann, was es ermöglicht, einen erfindungsgemäßen Hauptbremszylinder mit einem Bremsdruckregelsystem zusammenzuschalten, welches selbst keine Vorladepumpe umfaßt, um so das Bremsdruckregelsystem mit relativ geringem Aufwand auch mit einer Antriebsschlupfregelungs- und/oder Fahrdynamikregelungsfunktion versehen zu können.

Bei einem Ausführungsbeispiel eines erfindungsgemäßen Hauptbremszylinders sind der Rücklaufanschluß, die eine Druckkammer und der Vorratsbehälter in dieser Reihenfolge in Fließrichtung des Hydraulikfluidstroms hintereinander angeordnet und die Drossel ist zwischen der einen Druckkammer und dem Vorratsbehälter angeordnet. Bevorzugt ist bei diesem Ausführungsbeispiel die Drossel in der einen Druckkammer angeordnet, d.h. der Hydraulikfluidstrom von der Vorladepumpe wird über den Rücklaufanschluß in die eine Druckkammer geleitet und durch die darin angeordnete Drossel daran gehindert, verzögerungsfrei aus der Druckkammer in den Vorratsbehälter weiterzuströmen. Bei diesem letztgenannten Ausführungsbeispiel kann die Drossel beispielsweise mit einem in der einen Druckkammer angeordneten Primärkolben so verbunden sein, daß sie mit dem Primärkolben verschiebbar ist.

Bei einem anderen Ausführungsbeispiel eines erfindungsgemäßen Hauptbremszylinders ist der Rücklaufanschluß mit einem der einen Druckkammer vorgelagerten Ringraum verbunden, der seinerseits mit der einen Druckkammer und dem Vorratsbehälter in Verbindung steht. Die Verbindung zwischen dem Ringraum und der einen Druckkammer erfolgt beispielsweise durch ein im Primärkolben des Hauptbremszylinders angeordnetes Zentralventil, das in seiner Ruhestellung, die es bei unbetätigtem Hauptbremszylinder einnimmt, offen ist. Bei diesem Ausführungsbeispiel haben demnach der Vorratsbehälter, die eine Druckkammer und der Rücklaufanschluß je eine Flüssigkeitsverbindung zu dem Ringraum und die Drossel ist zwischen dem Vorratsbehälter und dem Ringraum angeordnet. Die Drossel kann dabei in das Hauptzylindergehäuse geeignet integriert sein, beispielsweise in eine vom Ringraum zum Vorratsbehälter führende, im Hauptzylindergehäuse ausgebildete Leitung, sie kann jedoch auch in einem Anschlußstutzen des Vorratsbehälters angeordnet sein, beispielsweise in Form eines in den Anschlußstutzen eingeschobenen Einsatzes.

Bei einem noch anderen Ausführungsbeispiel eines erfindungsgemäßen Hauptbremszylinders ist die Drossel in einem Adapterstück angeordnet, das sich zwischen dem Vorratsbehälter und dem Hauptzylindergehäuse befindet und den Rücklaufanschluß umfaßt. Diese erfindungsgemäße Lösung ist sehr kostengünstig, da an bereits produzierten Hauptbremszylinderausführungsformen nichts verändert zu werden braucht. Darüberhinaus sichert eine solche Lösung größtmögliche Flexibilität, da je nach der gewünschten Ausstattung eines Fahrzeuges entweder das Adapterstück Verwendung finden oder an dessen Stelle ein lediglich die Bauhöhe des Adapterstückes überbrückendes Zwischenstück ohne weitere Funktion treten kann.

Mehrere Ausführungsbeispiele des erfindungsgemäßen Hauptbremszylinders werden im folgenden anhand schematischer Figuren näher erläutert. Es zeigt:
- Fig. 1: Ein Prinzipschema eines erfindungsgemäßen Hauptbremszylinders, der mit einer Vorladepumpe und einem Bremsdruckregelsystem zusammengeschaltet ist,
- Fig. 2: einen Längsschnitt durch ein erstes Ausführungsbeispiel eines erfindungsgemäßen Hauptbremszylinders,
- Fig. 3: eine vergrößerte Darstellung eines Teils der Figur 2,
- Fig. 4: einen Längsschnitt durch ein zweites Ausführungsbeispiel eines erfindungsgemäßen Hauptbremszylinders,
- Fig. 5: einen Ausschnitt aus Figur 4 in vergrößerter Darstellung,
- Fig. 6: den Schnitt durch einen Anschlußstutzen eines Hydraulikfluid-Vorratsbehälters gemäß einem dritten Ausführungsbeispiel eines erfindungsgemäßen Hauptbremszylinders, und
- Fig. 7: den Schnitt durch ein Adapterstück gemäß einem vierten Ausführungsbeispiel eines erfindungsgemäßen Hauptbremszylinders.

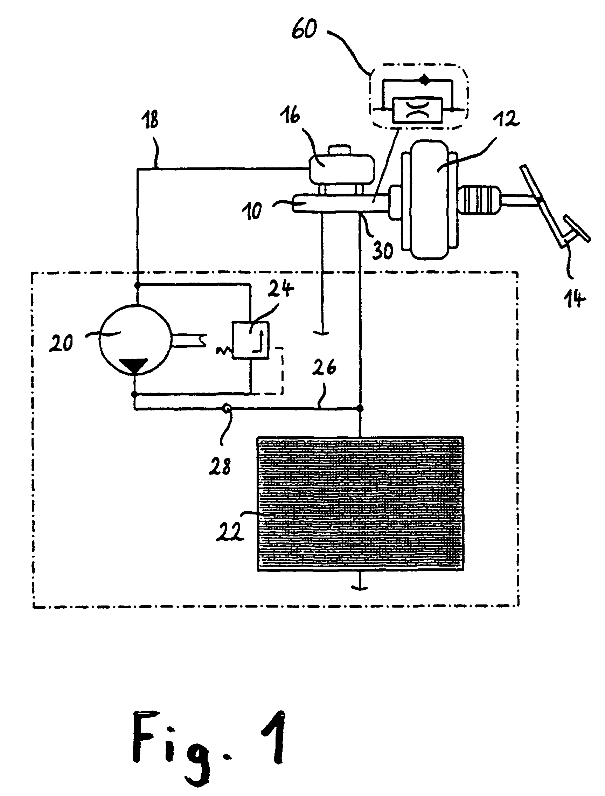

Figur 1 zeigt schematisch einen Hauptbremszylinder 10, der in üblicher Weise mit einem Bremskraftverstärker 12 zu einer Einheit verspannt ist. In diese Einheit aus Hauptbremszylinder 10 und Bremskraftverstärker 12 kann über ein Bremspedal 14 eine Betätigungskraft eingeleitet werden.

Zu dem Hauptbremszylinder 10 gehört ein Hydraulikfluid-Vorratsbehälter 16, der über zwei Anschlußstutzen flüssigkeitsleitend mit dem Hauptbremsbremszylinder 10 verbunden ist. Eine Hydraulikleitung 18 verbindet den Vorratsbehälter 16 mit einer Vorladepumpe 20, die den Vordruck für eine nicht gezeigte Rückförderpumpe eines lediglich als Kasten dargestellten Bremsdruckregelsystems 22 liefert. Die Vorladepumpe 20, die im Gegensatz zur nicht gezeigten Rückförderpumpe auf geringen Druck und hohen Volumenstrom ausgelegt ist, weist ein Druckbegrenzungsventil 24 auf, das bei geschlossener Druckseite der Vorladepumpe 20 in Aktion tritt und überschüssigen Druck absteuert. Die Vorladepumpe 20 kann alternativ auch so ausgeführt sein, beispielsweise als Flügelzellenpumpe mit entsprechend großen Spalten, daß sie einen Betrieb gegen eine geschlossene Druckseite ohne weiteres verkraftet. Das Druckbegrenzungsventil 24 ist dann nicht notwendig. Druckseitig ist die Vorladepumpe 20 über eine Hydraulikleitung 26 mit einem Rückschlagventil 28 zum einen mit dem Bremsdruckregelsystem 22 und zum anderen über einen Rücklaufanschluß 30 mit dem Hauptbremszylinder 10 verbunden.

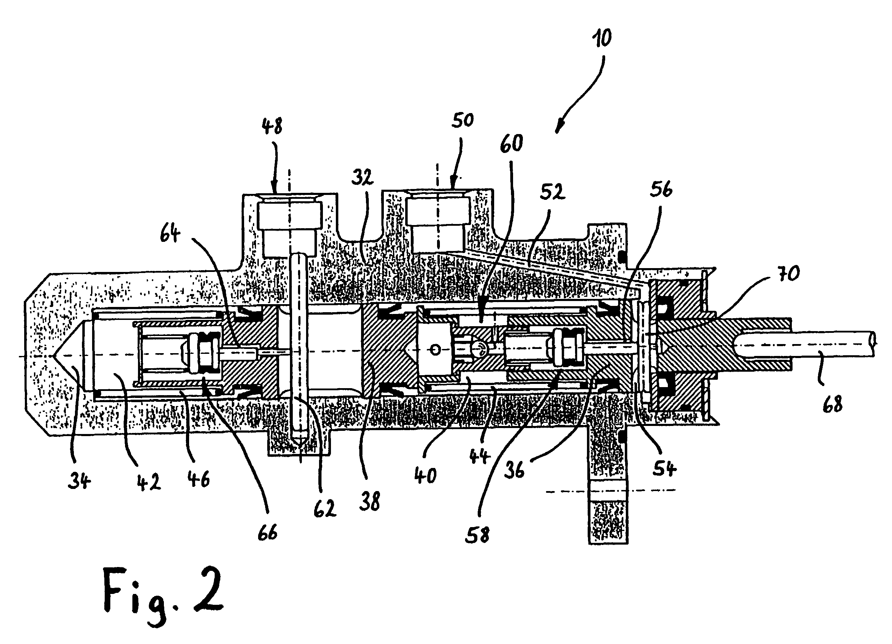

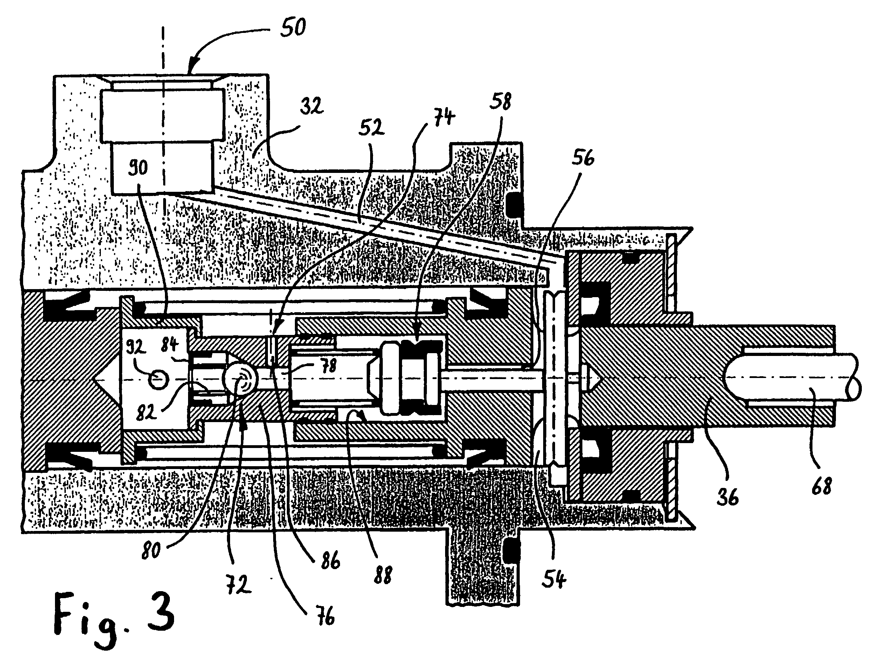

In den Figuren 2 und 3 ist eine erste Ausführungsform eines Hauptbremszylinders 10 detaillierter gezeigt. Der Hauptbremszylinder 10 hat ein Hauptzylindergehäuse 32 mit einer Längsbohrung 34, in der ein als Primärkolben 36 bezeichneter erster Druckkolben und ein als Sekundärkolben 38 bezeichneter zweiter Druckkolben abdichtend angeordnet sind. Zwischen dem Primärkolben 36 und dem Sekundärkolben 38 ist in der Längsbohrung 34 eine erste Druckkammer 40 begrenzt, die über einen nicht dargestellten Auslaß mit einem ersten Bremskreis der Fahrzeugbremsanlage verbindbar ist. In analoger Weise begrenzen der Sekundärkolben 38 und das gehäuseinnere Ende der Längsbohrung 34 eine zweite Druckkammer 42, die mit einem zweiten Bremskreis der Fahrzeugbremsanlage verbindbar ist. Die Kolben 36 und 38 werden durch Rückstellfedern 44 und 46 in ihre Ausgangsstellung vorgespannt, die sie im unbetätigten Zustand des Hauptbremszylinders 10 einnehmen und die in den Figuren 2 und 3 dargestellt ist.

Der in den Figuren 2 und 3 nicht dargestellte Hydraulikfluid-Vorratsbehälter 16 rastet mit seinen beiden Anschlußstutzen in entsprechend geformte Anschlußöffnungen 48 und 50 des Hauptzylindergehäuses 32 ein. Hydraulikfluid kann dann aus dem Vorratsbehälter 16 durch die in Figur 2 rechte Anschlußöffnung 50, einen sich daran anschließenden Kanal 52, einen der ersten Druckkammer 40 vorgelagerten Ringraum 54 und weiter durch eine zentrale Durchgangsöffnung 56 im Primärkolben 36 vorbei an einem ersten Zentralventil 58 und eine strömungsrichtungsabhängige Drossel 60, deren Zweck im folgenden noch genauer erläutert werden wird, in die erste Druckkammer 40 gelangen. Durch die in Figur 2 linke Anschlußöffnung 48, einen hohlen Querstift 62 und weiter durch eine zentrale Durchgangsöffnung 64 im Sekundärkolben 38 vorbei an einem zweiten Zentralventil 66 kann Hydraulikfluid aus dem Vorratsbehälter 16 in die zweite Druckkammer 42 gelangen. Über eine mit dem Bremspedal 14 verbundene Eingangsstange 68 kann eine Betätigungskraft in den Hauptbremszylinder 10 bzw. in dessen Primärkolben 36 eingeleitet werden, die den Primärkolben 36 und den hydraulisch damit gekoppelten Sekundärkolben 38 in druckaufbauender Richtung, d.h. in Figur 2 nach links verschiebt. Die beiden Zentralventile 58 und 66, die in der Ruhestellung des Primär- und des Sekundärkolbens 36 bzw. 38 durch Anschlag an einem Querstift 70 bzw. dem Querstift 62 offen gehalten sind, schließen sich bei einer Betätigung des Hauptbremszylinders 10 und ermöglichen so einen Druckaufbau in den Druckkammern 40 und 42.

Die strömungsrichtungsabhängige Drossel 60 besteht funktionell aus einem Rückschlagventil 72 und einer Drosselöffnung 74 (siehe Figur 3). Bei dem in Figur 3 dargestellten ersten Ausführungsbeispiel ist die strömungsrichtungsabhängige Drossel 60 durch einen im wesentlichen rohrförmigen Grundkörper 76 gebildet, der mit einer sich im mittleren Bereich kegelförmig verengenden Durchgangsbohrung 78 versehen ist. Die kegelförmige Verengung der Durchgangsbohrung 78 bildet den Ventilsitz für eine Kugel 80 des Rückschlagventils 72. Die Kugel 80 ist mittels einer Feder 82 gegen den Ventilsitz vorgespannt. Die Feder 82 wird von einem im Querschnitt U-förmigen Federhalteblech 84 gehalten, das in das bezüglich Figur 3 linke Ende der Durchgangsbohrung 78 des Grundkörpers 76 eingepreßt ist. Die Drosselöffnung 74 ist im ersten Ausführungsbeispiel durch einen radialen Kanal 86 im Grundkörper 76 gebildet, der sich zwischen dem Abschnitt der Durchgangsbohrung 78 mit geringerem Durchmesser und der Außenumfangsfläche des Grundkörpers 76 erstreckt. Der Grundkörper 76 taucht mit seinem in Figur 3 rechten Endabschnitt in eine Bohrung 88 des Primärkolbens 36 ein, in der auch das erste Zentralventil 58 aufgenommen ist. Auf dem in Figur 3 linken Endabschnitt des Grundkörpers 76 ist ein hohlzylindrischer Federteller 90 verschiebbar angeordnet, an dem sich die Rückstellfeder 44 des Primärkolbens 36 abstützt. Der Federteller 90 hat mehrere radiale Durchlässe 92, die eine ungedrosselte Verbindung zwischen der ersten Druckkammer 40 und der Drossel 60 herstellen.

Im folgenden soll die Funktionsweise des Hauptbremszylinders 10 genauer erläutert werden. Vorausgesetzt wird dabei, daß die von der Vorladepumpe 20 kommende Hydraulikleitung 26 (siehe Figur 1) in die erste Druckkammer 40 des Hauptbremszylinders 10 mündet, d.h., daß der Rücklaufanschluß 30 die Hydraulikleitung 26 mit der ersten Druckkammer 40 verbindet (in den Figuren 2 und 3 nicht dargestellt).

Bei einer normalen Bremsung wird wie bereits angedeutet über die Eingangsstange 68 eine Betätigungskraft auf den Primärkolben 36 übertragen, was zur Folge hat, daß sich die beiden Kolben 36 und 38 nach links verschieben, wodurch nach dem im Zuge dieser Verschiebung erfolgenden Schließen der Zentralventile 58 und 66 Bremsdruck in den Druckkammern 40 und 42 aufgebaut wird. Entfällt nach vorgenommener Bremsung die über die Eingangsstange 68 eingeleitete Betätigungskraft, so bewegen die Rückstellfedern 44 und 46 die Kolben 36 und 38 wieder nach rechts zurück in ihre Ausgangsstellungen. Gegen Ende dieser Rückhubbewegung öffnen sich die beiden Zentralventile 58 und 66 und es strömt Hydraulikfluid aus dem Vorratsbehälter 16 auf den bereits oben genannten Wegen in die Druckkammern 40 und 42. Die Drossel 60 setzt dabei dem in die erste Druckkammer 40 strömenden Hydraulikfluid keinen nennenswerten Widerstand entgegen, da das Rückschlagventil 72 nur leicht in seine Schließstellung vorgespannt ist und sich somit leicht öffnet. Eine bezüglich dieser Fließrichtung des Hydraulikfluids unerwünschte Drosselung findet nicht statt und die Leistungsfähigkeit des Hauptbremszylinders 10 bleibt erhalten.

Bei einem soeben beschriebenen, normalen Bremsvorgang wird die Vorladepumpe 20 nicht in Betrieb gesetzt. Hierzu kommt es jedoch, wenn eine dem Bremsdruckregelsystem 22 zugeordnete und nicht separat dargestellte Steuereinheit feststellt, daß beispielsweise eines der angetriebenen Räder des Fahrzeuges durchdreht. Die daraufhin von der Steuereinheit aktivierte Vorladepumpe 20 führt dann über die Hydraulikleitung 26 der ersten Druckkammer 40 einen bestimmten Vordruck zu, der beispielsweise im Bereich von 3 bar liegen kann. Die in der ersten Druckkammer 40 angeordnete Drossel 60 verhindert die sofortige Weiterleitung dieses Vorladedruckes in den Vorratsbehälter 16, weil das Rückschlagventil 72 geschlossen bleibt und die durch den radialen Kanal 86 im Grundkörper 76 der Drossel 60 gebildete Drosselöffnung 74 nur einen stark verzögerte Druckweiterleitung ermöglicht. In der ersten Druckkammer 40 baut sich daher im wesentlichen der von der Vorladepumpe 20 erzeugte Vorladedruck auf. Je nach Höhe des erzeugten Vorladedruckes und der Rückstellkraft der Rückstellfeder 46 wird sich auch in der zweiten Druckkammer 42 ein bestimmter Vorladedruck aufbauen.

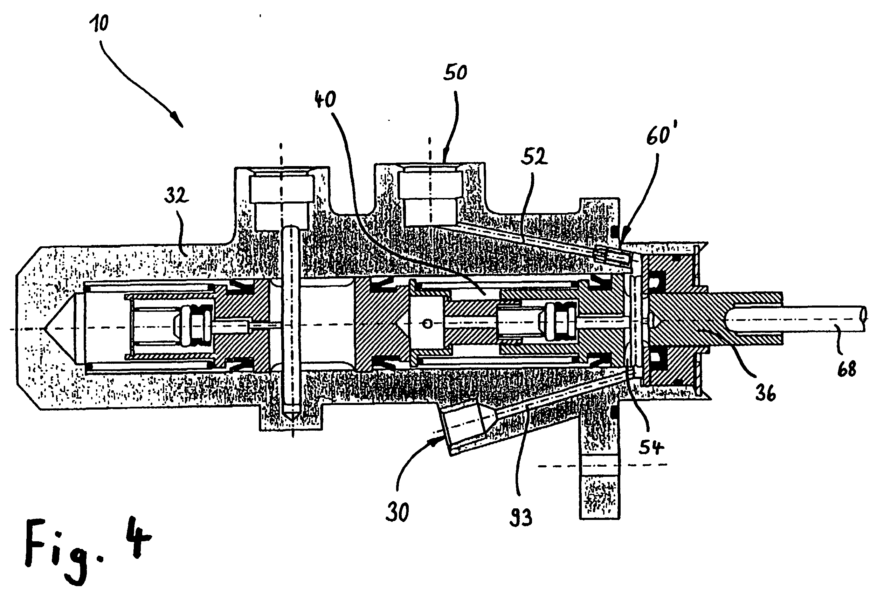

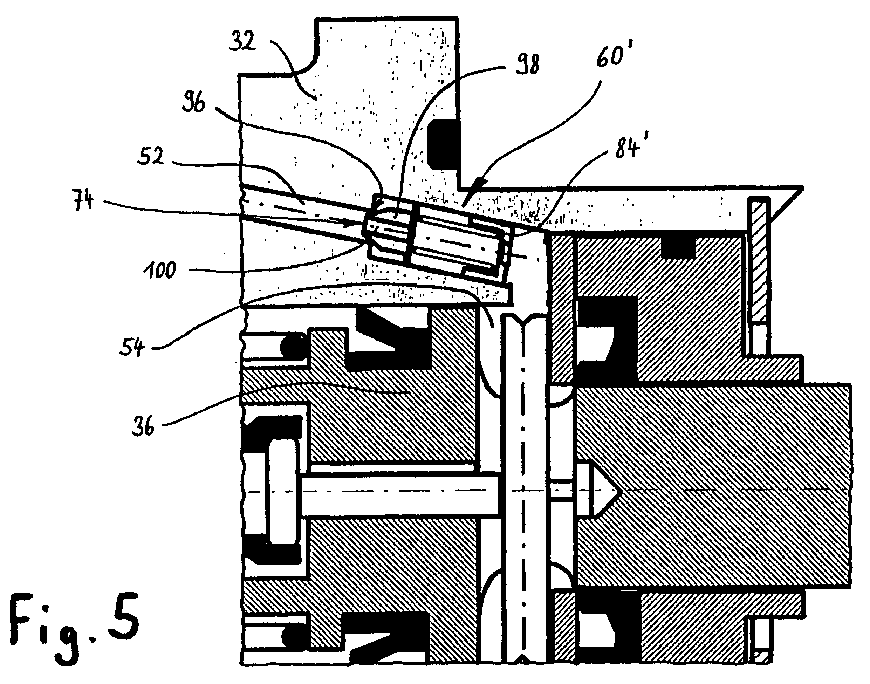

Der in der ersten Druckkammer 40 und ggf. auch der zweiten Druckkammer 42 erzeugte Vorladedruck ermöglicht nun trotz unbetätigtem Hauptbremszylinder eine korrekte Funktion des Bremsdruckregelsystems 22, dessen nicht dargestellter Rückförderpumpe dieser Vorladedruck in üblicher Weise zugeführt wird. Ein in den Figuren 4 und 5 dargestelltes zweites Ausführungsbeispiel des Hauptbremszylinders 10 ist im wesentlichen funktionsgleich mit dem zuvor beschriebenen ersten Ausführungsbeispiel, unterscheidet sich jedoch bezüglich der Anordnung der Drossel 60 und des Rücklaufanschlusses 30. Bei dem zweiten Ausführungsbeispiel mündet der mit der Hydraulikleitung 26 zu verbindende Rücklaufanschluß 30 nicht in die erste Druckkammer 40, sondern über einen Kanal 93 in den der Druckkammer 40 vorgelagerten Ringraum 54 (siehe Figur 4). Die etwas abgewandelte und daher mit 60' bezeichnete Drossel ist bei dem zweiten Ausführungsbeispiel in einem erweiterten Endabschnitt 94 des Kanals 52 angeordnet, der die Anschlußöffnung 50 mit dem Ringraum 54 verbindet. Rückschlagventil und Drosselöffnung werden bei der Drossel 60' durch einen federnd gegen einen Sitz 96 vorgespannten Ventilkörper 98 gebildet, der axial von einem die Drosselöffnung darstellenden Kanal 100 durchsetzt ist. Mit 84' ist ein Federhalteblech bezeichnet, das in das in Figur 5 rechte Ende des Kanals 52 eingepreßt ist und das die den Ventilkörper 98 gegen den Sitz 96 vorspannende Feder hält.

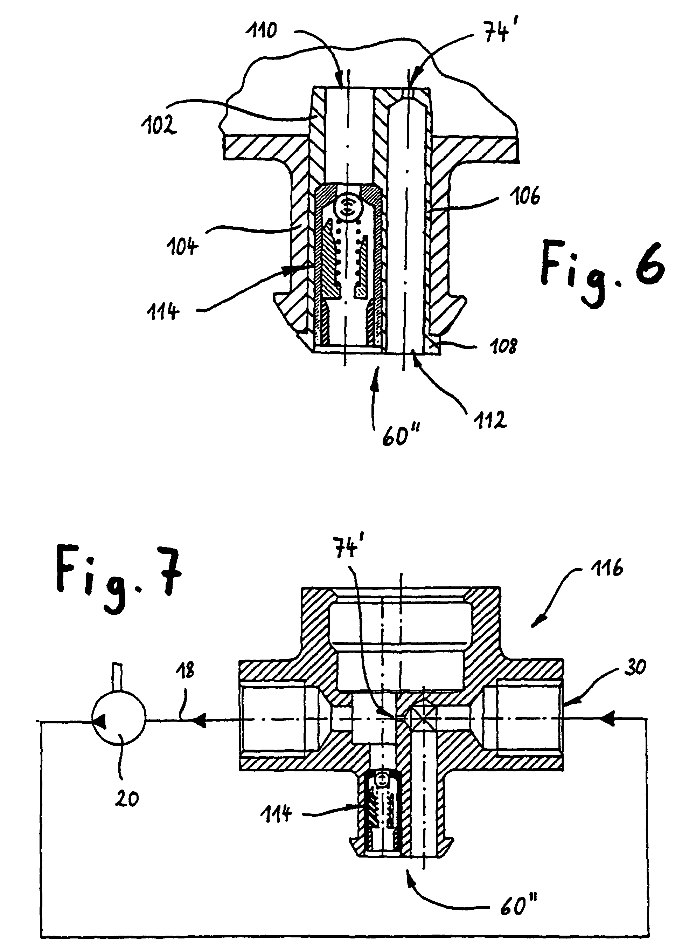

Bei einer gegenüber dem zweiten Ausführungsbeispiel abgewandelten dritten Ausführungsform des Hauptbremszylinders 10 befindet sich die Drossel 60" nicht in dem Kanal 52 des Hauptzylindergehäuses 32, sondern ist in Form eines Einsatzes 102 ausgeführt, der in einen zur Verbindung mit der Anschlußöffnung 50 vorgesehenen Anschlußstutzen 104 des Vorratsbehälters 16 gesteckt ist. Wie aus Figur 6 hervorgeht, besteht der Einsatz 102 aus einem zylindrischen Grundkörper 106, der an seinem äußeren Ende einen Kragen 108 als Einschubbegrenzung und zwei axiale Durchgangsausnehmungen 110 und 112 aufweist. In die in Figur 6 linke Durchgangsausnehmung 110 ist ein herkömmliches Rückschlagventil 114 eingesetzt, das einen Abfluß von Hydraulikfluid aus dem Vorratsbehälter 16 praktisch nicht behindert, den Rückfluß von Hydraulikfluid in den Vorratsbehälter 16 jedoch sperrt. Die in Figur 6 rechte Durchgangsausnehmung 112 ist an ihrem im Vorratsbehälter 16 angeordneten Ende zur Bildung einer Drosselöffnung 74' stark verengt. Die Drossel 60" gemäß dem dritten Ausführungsbeispiel kann ohne wesentliche Konstruktionsänderungen in einen herkömmlichen Hauptbremszylinder 10 integriert werden.

Bei einem vierten Ausführungsbeispiel (siehe Figur 7) ist die Drossel 60" des dritten Ausführungsbeispiels in ein kreuzförmiges Adapterstück 116 integriert, welches zwischen den Vorratsbehälter 16 und die Anschlußöffnung 50 des Hauptzylindergehäuses 32 geschaltet ist. Im Unterschied zu den ersten drei Ausführungsbeispielen ist beim vierten Ausführungsbeispiel der Rücklaufanschluß 30 nicht am Hauptzylindergehäuse 32, sondern am Adapterstück 116 ausgebildet. Der in Figur 7 dem Rücklaufanschluß 30 gegenüberliegende Anschluß des Adapterstücks 116 nimmt die Hydraulikleitung 18 auf, die an ihrem anderen Ende mit der Saugseite der Vorladepumpe 20 verbunden ist. Der in Figur 7 obere Anschluß des Adapterstücks 116 nimmt über eine Gummimuffe den einen Anschlußstutzen des Vorratsbehälters 16 auf, während der gegenüberliegende, untere Anschluß des Adapterstückes ebenfalls über eine übliche Gummimuffe in die Anschlußöffnung 50 zu stecken ist. Bei Verwendung des Adapterstücks 116 braucht an herkömmlichen Hauptzylindergehäusen keine konstruktive Veränderung vorgenommen zu werden.

Hauptbremszylinder 10 gemäß dem zweiten, dritten und vierten Ausführungsbeispiel haben den Vorteil einer statistisch höheren Ausfallsicherheit der Fahrzeugbremsanlagen, da der Rücklaufanschluß 30 nicht direkt in die erste Druckkammer 40 mündet.

## Patentansprüche

1. Hauptbremszylinder (10) für eine hydraulische Fahrzeugbremsanlage, mit einem Hauptzylindergehäuse (32) und mindestens einer darin ausgebildeten Druckkammer (40), einem mit der mindestens einen Druckkammer (40) verbundenen Vorratsbehälter (16) für Hydraulikfluid, welcher darüberhinaus zur Verbindung mit einer Vorladepumpe (20) eines Bremsdruckregelsystems (22) vorgesehen ist, und einem Rücklaufanschluß (30) für Hydraulikfluid, der eine Flüssigkeitsverbindung zwischen der Druckseite der Vorladepumpe (20), dem Vorratsbehälter (16) und zumindest der einen Druckkammer (40) herstellt,
**dadurch gekennzeichnet, daß** in dieser Flüssigkeitsverbindung eine Drossel (60, 60', 60") angeordnet ist, die den Hydraulikfluidstrom aus dem Vorratsbehälter (16) in die mindestens eine Druckkammer (40) nicht behindert und den Hydraulikfluidstrom von dem Rücklaufanschluß (30) in den Vorratsbehälter (16) immer bedrosselt.

2. Hauptbremszylinder nach Anspruch 1,
**dadurch gekennzeichnet, daß** der Rücklaufanschluß (30), die eine Druckkammer (40) und der Vorratsbehälter (16) in Rückflußrichtung des Hydraulikfluidstroms hintereinander angeordnet sind und die Drossel (60) zwischen der einen Druckkammer (40) und dem Vorratsbehälter (16) angeordnet ist.

3. Hauptbremszylinder nach Anspruch 2,
**dadurch gekennzeichnet, daß** die Drossel (60) in der einen Druckkammer (40) angeordnet ist.

4. Hauptbremszylinder nach Anspruch 1,
**dadurch gekennzeichnet, daß** der Rücklaufanschluß (30) mit einem der einen Druckkammer (40) vorgelagerten Ringraum (54) verbunden ist, der seinerseits mit der einen Druckkammer (40) und dem Vorratsbehälter (16) in Verbindung steht.

5. Hauptbremszylinder nach Anspruch 4,
**dadurch gekennzeichnet, daß** die Drossel (60', 60") zwischen dem Vorratsbehälter (16) und dem Ringraum (54) angeordnet ist.

6. Hauptbremszylinder nach Anspruch 4 oder 5,
**dadurch gekennzeichnet, daß** die Drossel (60") in einem Anschlußstutzen (104) des Vorratsbehälters (16) angeordnet ist.

7. Hauptbremszylinder nach Anspruch 1,
**dadurch gekennzeichnet, daß** die Drossel (60") in einem Adapterstück (116) angeordnet ist, daß sich zwischen dem Vorratsbehälter (16) und dem Hauptzylindergehäuse (32) befindet und den Rücklaufanschluß (30) umfaßt.

## Claims

1. A brake master cylinder (10) for a hydraulic vehicle brake system, comprising a master cylinder housing (32) and at least one pressure chamber (40) designed therein, a hydraulic fluid reservoir (16) that is connected to the at least one pressure chamber (40) and, furthermore, is provided for connection to a precharge pump (20) of a brake pressure regulating system (22), and a hydraulic fluid return connection (30) which makes a fluid connection between the delivery side of the precharge pump (20), the reservoir (16) and at least the one pressure chamber (40),
**characterized in that** a throttle (60, 60', 60") not impeding the hydraulic fluid stream out of the reservoir (16) into the at least one pressure chamber (40) and always throttling the hydraulic fluid stream from the return connection (30) into the reservoir (16) is arranged in said fluid connection.

2. The brake master cylinder according to claim 1,
**characterized in that** the return connection (30), the one pressure chamber (40) and the reservoir (16) are arranged one behind the other in the return flow direction of the hydraulic fluid stream and the throttle (60) is arranged between the one pressure chamber (40) and the reservoir (16).

3. The brake master cylinder according to claim 2,
**characterized in that** the throttle (60) is arranged in the one pressure chamber (40).

4. The brake master cylinder according to claim 1,
**characterized in that** the return connection (30) is connected to an annular space (54) which is located upstream of the one pressure chamber (40) and itself is connected to the one pressure chamber (40) and the reservoir (16).

5. The brake master cylinder according to claim 4,
**characterized in that** the throttle (60', 60") is arranged between the reservoir (16) and the annular space (54).

6. The brake master cylinder according to claim 4 or 5,
**characterized in that** the throttle (60") is arranged in a nipple (104) of the reservoir (16).

7. The brake master cylinder according to claim 1,
**characterized in that** the throttle (60") is arranged in an adapter piece (116) that is located between the reservoir (16) and the master cylinder housing (32) and comprises the return connection (30).

## Revendications

1. Maître-cylindre de frein (10) pour un système de freinage hydraulique de véhicule, avec un carter (32) et au moins une chambre de pression (40) ménagée à l'intérieur dudit carter, un réservoir (16) de fluide hydraulique relié à ladite chambre de pression (40), lequel est en outre prévu pour communiquer avec une pompe à engrenage (20) d'un système de régulation de pression de freinage (22), et un raccord de retour (30) du fluide hydraulique, lequel raccord assure la liaison hydraulique entre le côté refoulement de la pompe à engrenage (20), le réservoir (16) et ladite chambre de pression (40),
**caractérisé en ce qu'**un clapet d'étranglement (60, 60', 60") est disposé dans cette liaison hydraulique, lequel clapet n'entrave pas le flux de fluide hydraulique en provenance du réservoir (16) vers au moins une chambre de pression (40) et restreint à demeure le flux de fluide hydraulique en provenance du raccord de retour (30) vers le réservoir (16).

2. Maître-cylindre de frein selon la revendication 1,
**caractérisé en ce que** le raccord de retour (30), la chambre de pression (40) et le réservoir (16) sont disposés les uns derrière les autres dans le sens d'écoulement de retour du flux de fluide hydraulique et que le clapet d'étranglement (60) est disposé entre la chambre de pression (40) et le réservoir (16).

3. Maître-cylindre de frein selon la revendication 2,
**caractérisé en ce que** le clapet d'étranglement (60) est disposé dans la chambre de pression (40).

4. Maître-cylindre de frein selon la revendication 1,
**caractérisé en ce que** le raccord de retour (30) est relié à un espace annulaire (54) situé en amont de la chambre de pression (40), lequel espace annulaire est pour sa part en liaison avec la chambre de pression (40) et le réservoir (16).

5. Maître-cylindre de frein selon la revendication 4,
**caractérisé en ce que** le clapet d'étranglement (60', 60") est disposé entre le réservoir (16) et l'espace annulaire (54).

6. Maître-cylindre de frein selon la revendication 4 ou 5,
**caractérisé en ce que** le clapet d'étranglement (60") est disposé dans un embout de raccordement (104) du réservoir (16).

7. Maître-cylindre de frein selon la revendication 1,
**caractérisé en ce que** le clapet d'étranglement (60") est disposé dans un adaptateur (116) lequel se trouve entre le réservoir (16) et le carter (32) du maître-cylindre et comprend le raccord de retour (30).
